# EUROPEAN PATENT SPECIFICATION

(11) **EP 0 661 908 B1**
(45) Date of publication and mention of the grant of the patent: **14.07.1999**
(21) Application number: 94309913.5
(22) Date of filing: 30.12.1994
(51) Int. Cl.: H05B 6/68

(54) **Operating switch for a microwave oven and control circuit therefor**
Bedienungsschalter eines Mikrowellenofens und Steuerschaltung hierzu
Interrupteur de commande pour un four à micro-ondes et circuit de commande à cet effet

(30) Priority: 31.12.1993 KR 9331719; 06.12.1994 KR 9432956
(43) Date of publication of application: 05.07.1995
(73) Proprietor: Samsung Electronics Co., Ltd., Suwon-city, Kyungki-do 441-370 (KR)
(72) Inventor: Lee, Sung-Ho, Suwon-city, Kyungki-do (KR)
(74) Representative: Read, Matthew Charles

(56) References cited:
- DE-A- 3 642 807
- DE-A- 4 034 609
- DE-A- 4 117 031
- GB-A- 2 059 634
- GB-A- 2 264 370
- GB-A- 2 267 554
- US-A- 4 130 749
- US-A- 4 636 621
- US-A- 4 697 057

## Description

The present invention relates to an operating switch for an oven such as a microwave oven.

A conventional microwave oven usually has menu selection switches, a timer control switch, and cooking start and stop switches disposed separately on a control panel.

US-A-4697057 discloses a single function rotary switching device employed in a microwave oven.

US-A-5134262 (Lee), discloses a single rotary knob that has a dual function of setting a cooking time and a defrost time. However, no means for making a selection from a cooking menu is disclosed and accordingly, a separate means for making such a selection is needed. Furthermore, the switch for starting and stopping the cooking process is separately disposed.

The present invention seeks to overcome these drawbacks, and one object of the present invention is to provide an operating switch in which the aforementioned functions of cooking menu selection, timer setting and cooking start/stop are accomplished in a simpler yet speedier and more efficient manner.

DE-A-4117031 discloses a rotary operating switch having two rotary switching means and a push switch. The push switch is operated by reciprocating a portion only of the actuating member of one of the rotary switching means.

According to the present invention, there is provided an operating switch for an oven, comprising: a first rotary switching means, including a rotatable shaft, a fixed support member, a first knob at one end of the shaft to permit user rotation and reciprocation thereof, spring means for resiliently holding the shaft in a given axial position and a first switching disc extending radially outwardly from the shaft so as to be rotated thereby, for selecting a first cooking parameter; a second rotary switching means, having a rotatable member disposed coaxially about the shaft for selecting a second cooking parameter; and a push switch for activating a selected cooking process, wherein the shaft and the rotatable member are individually rotatable about a common axis and the shaft is movable against the spring means, together with said switching disc, longitudinally of said axis for closing the push switch.

Preferably, the first or the second switching means includes means for producing a digital signal according to the angular position of rotation thereof. More preferably, the first switching means includes a plurality of concentric electrically conductive tracks formed with radially extending lands at predetermined angular positions, and a plurality of resiliently deformable wiper contacts to be rotated with the shaft to make selective connection to said lands to define said digital signal. The the second switching means may include a plurality of concentric electrically conductive tracks formed with radially extending lands at predetermined angular positions, and a plurality of resiliently deformable wiper contacts to be rotated with the rotatable member to make selective connection to said lands to define said digital signal.

Preferably, the second switching means includes a second knob coaxial with and surrounding the first knob, and a fixed member, and the rotatable member includes a second switching disc and is drivingly coupled to the second knob. More preferably, the shaft extends through holes in the fixed member, the second switching disc and the first switching disc to said push switch.

A switch according to a further aspect of the present invention is installed in an oven, for instance a microwave oven.

A microwave oven employing a switch according to the present invention preferably includes control means responsive to said longitudinal movement of the shaft for starting a cooking process. More preferably, the control means is responsive to rotation of the shaft and the rotatable member for respectively selecting a cooking time and a menu option. Still more preferably, display means (140) responsive to the control means for displaying the set cooking time and menu option is included.

Driving means for generating microwave radiation under the control of the control means is preferably included.

In order that the invention may be more fully understood, an embodiment thereof will now be described with reference to the accompanying drawings in which:-
Figure 1 shows a microwave oven including a switch according to the present invention;
Figure 2 is a sectional view of principal parts of the operating switch;
Figure 3 is an exploded perspective view of principal parts of the operating switch shown in Figure 2 and;
Figure 4 is a blocked diagram of a control circuit for the microwave oven.

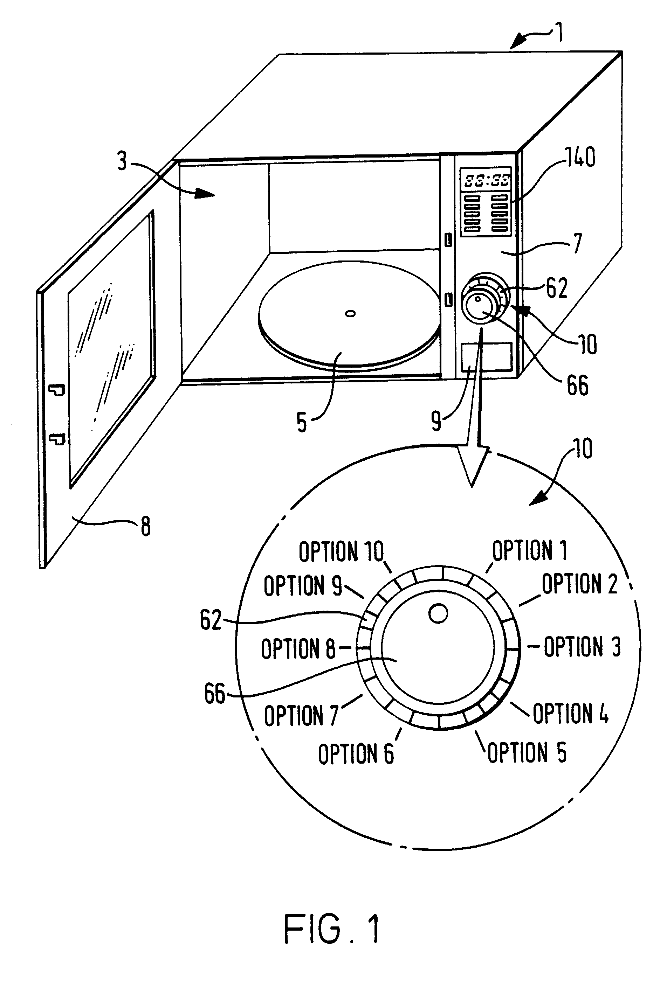

As illustrated in Figure 1, reference numeral 1 denotes the body of the microwave oven that has a cooking chamber 3 with a rotary dish 5 for rotating food therein in order to cook the food evenly, a control panel 7, a door 8 and a door open button 9. An operating switch 10 is mounted on the control panel 7 for selectively controlling the cooking time and cooking menu, and for starting or stopping a cooking operation.

The operating switch 10 includes a first rotary switching means 66 for setting the cooking time, and a second rotary switching means 62 for selecting the cooking menu, the first and second switching means being coaxially mounted for individual rotation about a common axis.

The switching means 66 can also be moved inwardly so as to act as a push-operated switch for starting a cooking operation.

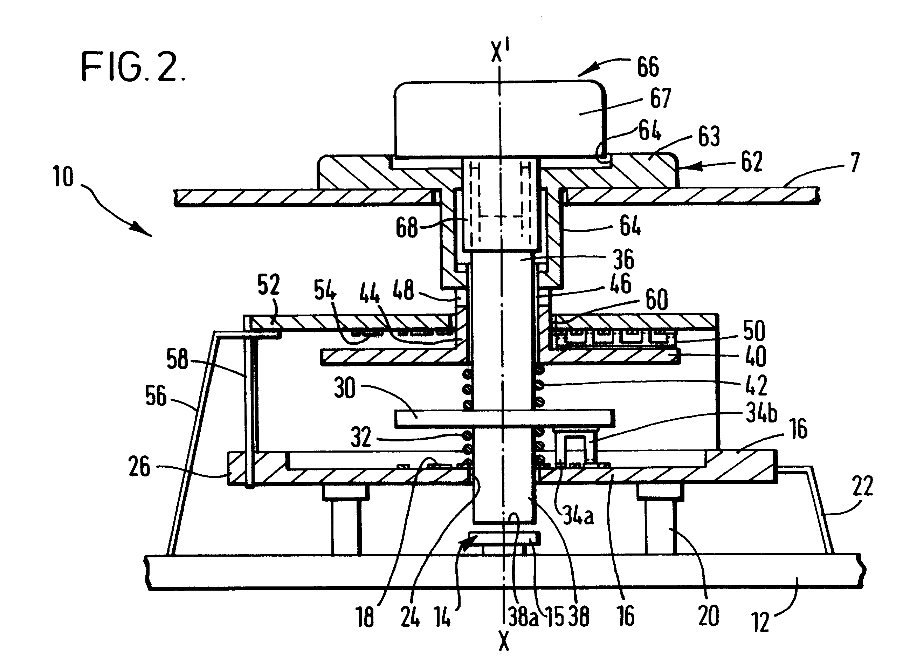

This can be seen more clearly from Figure 2; the first and second switching means 66,62 are rotatable about a common axis X-X' and the first switching means 66 can also be pushed longitudinally of the axis X-X' in order to operate a push-to-contact switch 14 which controls the start of the cooking operation, the switch 14 including a contact 15 mounted on a central area of a printed circuit board (PCB) 12 which also carries other circuit components (not shown).

The first switching means includes a first rotary knob 67 formed of electrically insulating plastics material, mounted on a shaft comprising shaft portions 36,38, the shaft rotating a first switching disc 30 relative to conductors 18 on a support member 16 to provide electrical signals for selecting the cooking time, as will be explained in more detail hereinafter.

The second switching means 62 includes a second rotary control knob 63 which drives a second switching disc 40 relative to conductors 54 on a generally disc shaped cover member 52, to provide switching signals for menu selection, as will be explained in more detail hereinafter.

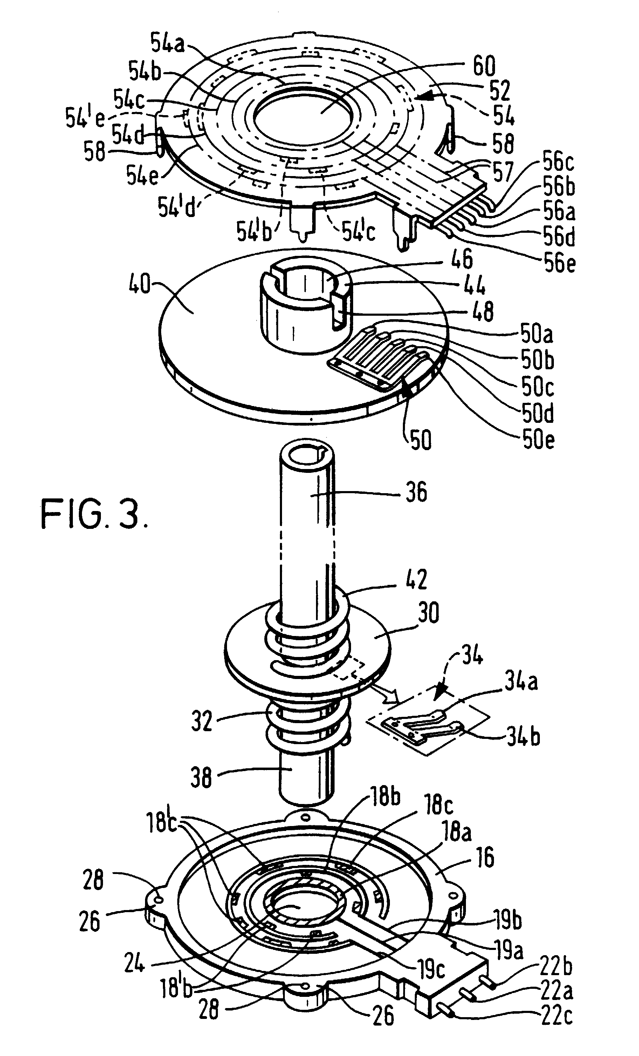

The structure of the first switching means 66 will now be considered in more detail with reference to Figures 2 and 3. The support member 16 is generally disc shaped with a central circular hole 24 through which the shaft portion 38 passes. The support member 16 is made of electrically insulating material and is formed with three concentric thin circular conductive tracks 18a,b,c formed of copper, that are individually connected to three pins of a terminal 22. The innermost track 18a is formed as a continuous circle and connected by conductive strip 19a to terminal 22a. The outer tracks 18b,c extend around a major part of the circumference of the hole 24 and are connected by tracks 19b, 19c to respective terminal pins 22b, 22c. The tracks 18b, 18c have radially inwardly directed lands 18'b, 18'c at predetermined angular positions around the tracks respectively. Mounted on the first switching disc 30 is a spring contact wiper member 34 and includes two parallel spring fingers 34a, 34b which, upon rotation of the switching disc 30 by knob 67, are swept in a circular path in the spaces between the tracks 18a and 18b, and 18b and 18c respectively.

As will be explained in more detail hereinafter, the shaft 36,38 and the disc 30 are mounted as a unit, resiliently between compression springs 32,42, which allow movement of the shaft longitudinally of its axis X-X'. The spring 32, which is made of metal, forms an electrical connection with the innermost track 18a, which is connected to earth through conductor 19a and central terminal 22a. The disc 30, which is itself electrically conductive is thus connected to earth through the spring 32. As the shaft 36,38 is rotated, the spring contacts 34a,34b, make selective connection with the lands 18'b,18'c, so as to selectively connect tracks 18b,18c and terminals 22b, 22c to earth. In this way, a binary signal is developed at terminals 22b,22c, which indicates the angular position of rotation of the knob 67 and is used as a digital signal for indicating the desired cooking time.

The support member 16 is formed with peripheral regions 26 that include holes 28 which, as will be explained hereinafter, receive lugs 58 formed on the cover member 52 so as to locate it in place. The support member 16 is mounted on the printed circuit board 12 by means of fixing lugs 20.

As previously mentioned, the shaft portions 36,38 and the first switching disc 30 are mounted between compression springs 32,42 to allow the knob 67 to be pushed longitudinally of the axis X-X' so as to operate the push switch 14. Thus, when the knob 67 is momentarily depressed, the contact 15 on the PCB 12 is momentarily connected to earth through the end 38a of shaft 38, the disc 3, spring 32 and track 18a so as to provide a signal indicating the start of the cooking operation. Thus, it will be seen that normally, the knob 67 is in the position shown in Figure 2 but, can be momentarily depressed against the force of spring 32 to produce the desired switching operation, with the shaft 36,38 then being returned to a position spaced from the contact 15 of switch 14. The second knob 63 includes a recess 64 which permits downward axial movement of the first knob 66.

Considering now the second switching means 62, this is configured to produce binary signals which represent user-selected cooking menu options, according to the position of rotation of the second control knob 63.

To this end, the control knob 63 is provided with axially extending extensions 64 that are drivingly received by slots 48 in a tubular flange 44 integrally formed with the second switching disc 40, which is formed of electrically insulating plastics material. Mounted on the switching disc 40 is a spring contact wiper member 50 formed with five generally parallel spaced wiper fingers 50a-e. The wiper fingers make selective wiping contact with the cover member 52 between a series of concentric conductive tracks 54a-e which are formed on its underside, and, in a similar way to the tracks 18, are connected to terminal pins 56 through conductive paths 57. The innermost conductive track 54 is a continuous ring around the periphery of a central hole 60 in the cover member 52. The radially innermost wiper contact 50a makes continuous contact with ring 54a. The other wiper contacts 50b-e contact the cover member 52 in the spaces between the tracks 54b-e, with the wiper 50e being disposed slightly radially outwardly of the corresponding track 54e. Each of the tracks 54b-e are formed with radially outwardly protruding lands 54'b-54'e. In use, the innermost circular track 54a is earthed through terminal pin 56a, so that the wiper 50 is earthed through finger 50a. As the knob 63 is rotated through the various cooking menu selection positions, the wiper contacts 50b-e selectively make contact with individual lands 54'b-54'e so as to develop binary signals on the output pins 56 as a function of the rotational position of knob 63.

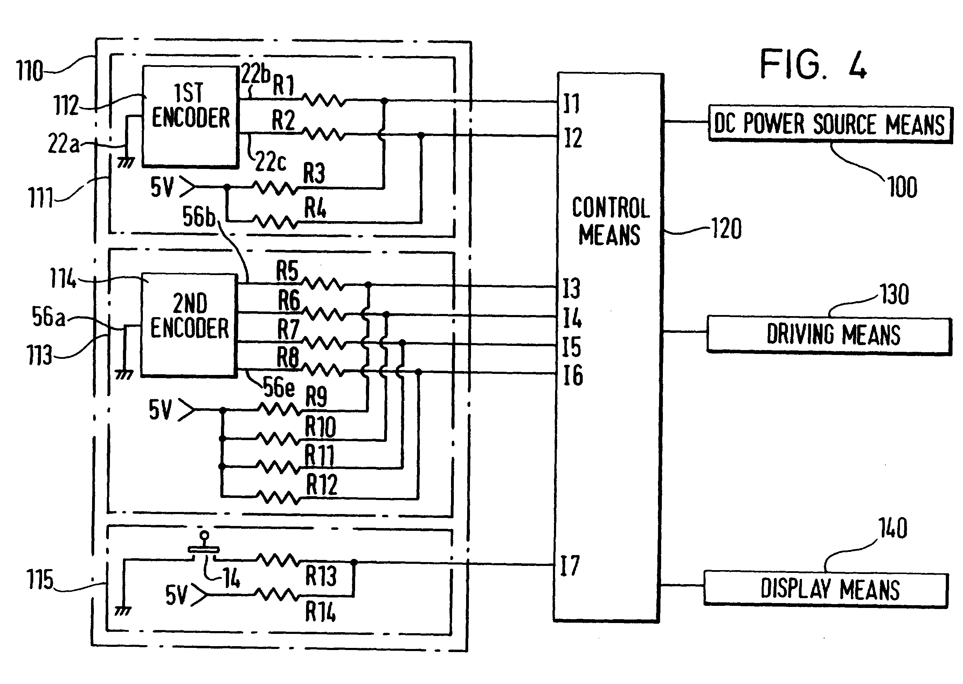

Figure 4 is a schematic circuit diagram for the microwave oven for selecting the cooking menu and cooking time, and commencing the cooking operation according to operation of the switch 10. As illustrated in Figure 4, a DC power source means 100 receives domestic AC power through an AC power source input terminal (not shown) and transforms it into a predetermined DC supply for driving the microwave oven.

The circuit of the operating switch 10 shown in Figures 1 to 3, is illustrated schematically as block 110 in Figure 4. The operating switch 110 comprises a time setting unit 111 for setting the cooking time, and menu selecting unit 113 for selecting a variety of cooking menus (by way of example: defreezing, rice cooking, steamed dish, potted stew, parboil) for a cooking time selected by operation of the unit 111; and an operation start unit 115 for starting or stopping the cooking operation set by the units 111 and 113.

A control means in the form of a microprocessor 120 receives a supply voltage from the DC source 100 and controls operation of the oven according to the input signals received from the operational switch 110.

The microprocessor 120 controls driving means 130 for the oven which typically comprises a relay or the like for controlling a drive power source for a magnetron which operates at microwave frequency. A display means 140 displays the cooking time and cooking menu input by the user by means of the input switch circuitry 110.

Considering the time setting circuit 111 in more detail, this comprises first encoder 112, which corresponds to the first switching disc 30, the wiper member 34 and the tracks 18b,c shown in Figure 3. Resistors R1-R4 are connected as shown to the output terminals 18b,18c of the encoder so that a voltage (V_{cc};5V) is selectively switched by the encoder so as to provide an output binary signal to inputs I1,I2 of the microprocessor 120 depending on the rotational position of the knob 67 (Figure 2).

The menu selecting unit 113 comprises a second encoder 114 corresponding to second switching disc 40, wiper contact 50 and tracks 54 shown in Figures 2 and 3. The output terminals 56b-e are connected as shown through resistors R5-R12 to the voltage source V_{cc}, as shown so as to provide a binary output on input lines I3-I6, thereby to provide the microprocessor 120 with a binary signal for menu selection, depending on the angular position of rotation of the second knob 63.

The start unit 115 includes the push to contact switch 14, together with resistors R13,R14, connected as shown to the voltage source V_{cc}. Operation of the switch 14 thus provides a pulse on line I7 to the microprocessor to indicate a start or stop function for turning on or turning off the power to the driving means 130.

Operation of the circuit of Figure 4 will now be described.

When AC power is initially connected to the microwave oven, the DC power source means 100 applies a predetermined DC voltage to the microprocessor 120 which initializes its circuits.

At this time, the user places food to be cooked on the rotary disc 5 and inputs the desired cooking time and cooking menu by rotating the knobs 67,63 of the operating switch 10 on the control panel 7. A method of inputting the cooking time and cooking menu with the operational switch 10 will now be described in detail.

First of all, the switching knob 67 of switch member 10 is pressed by the user so that the shaft 36,38 is moved longitudinally of its axis X-X' so that the shaft end 38a closes the switch 14, with the result that a pulse is developed on input I7 to the microprocessor 120.

Upon release of the knob 67, the spring 32 returns the shaft 36,38 and knob 67, to the position shown in Figure 2.

As apparent from the foregoing, when the contact 14 is connected to earth by its momentary contact with shaft 38, the power source (5V) is connected to earth through resistors R13 and R14 so that a low level voltage pulse is applied to input terminal I7 of the microprocessor 120. This low voltage pulse is detected by the microprocessor as a signal to commence cooking operation. The microprocessor 120 now displays through display means 140 that the cooking time is "1 minute" and outputs to the driving means 130 a control signal for turning on the drive of the magnetron. At this time, the microprocessor starts counting the driving time for the magnetron by way of an internal timer and the magnetron is driven for a period of 1 minute to perform a cooking operation.

During this cooking period of 1 minute, the desired cooking time is set by the user, by rotating the first switching knob 67. As a result, the first switching disc 30 and the associated wiper member 34 are rotated so that the finger members 34a,b make selective contact with the lands of circular tracks 18b,c. As a result, when the fingers 34a,34b make contact with corresponding lands on the circular tracks 18b,c, a low level voltage signal is produced, so that a digital signal is produced on output lines I1,I2 depending on the rotational position of the first switching disc 30. Whilst in the described embodiment, low level pulses are produced, it will be evident that the circuit could be reconfigured to produce corresponding high level pulses, if desired.

Thus, the binary output signal from encoder 112, for the two bit arrangement shown in the drawings, can output the following binary codes:- 00, 01, 11, 10.

The microprocessor 120 responds to the binary input signal on lines I1, I2 to set a cooking time determined by an stored program. It will be understood that the microprocessor 120 has a pre-programmed memory such as a ROM, which can be addressed to set the cooking time according to the input binary code, thereby to establish a cooking time determined by the position of rotation of knob 67. Also, the cooking time is displayed by means of display 140.

Also, if the switching knob 67 is pressed so as to move the shaft 38 axially and operate switch 14, after the desired cooking time has been set, the microprocessor 120 then operates to carry out cooking according to the cooking time set by the rotational position of knob 67.

Considering now the operation of the menu selection unit 113, one of the menu options is selected by the user (Option 1 to Option 10) by rotating the second knob 63 to an appropriate, desired position. As a result, the wiper fingers 50b-e make selective connection with the lands 54'b-e on tracks 54 to produce an appropriate 4-bit code at terminals 56b-56e. Thus, a 4-bit binary code e.g. 0000, 0001, 0010, 0011 and 1111 can be produced on the inputs I3-I6. By way of example, if the binary output from divider 114 is 0000, the microprocessor 120 receives a low level input signal on terminals I3-I6 and seeks an address corresponding to this signal and performs a corresponding program, relating to a cooking menu associated with the input selected by the position of the second knob 63. It will be understood that data corresponding to the menus are stored in a microprocessor memory and thus can be selected according to the 4-bit code. Also, the microprocessor 120 displays the selected cooking menu on display means 140.

When the first switching knob is pressed after selection of the desired cooking menu, the contact switch 14 is operated, producing a low level pulse on input I7 and as a result, the magnetron is driven by the driving means 130 for the selected driving time, according to the selected menu.

As can be seen from the foregoing, the operating switch 10 and its associated control circuit has the advantage that setting the cooking time, cooking menu and performing a starting operation can be achieved very simply under the control of a single switch unit, with the various functions being performed by movement relative to common axis.

Another advantage is that the assembly of the control panel is simplified due to the reduced number of components, as compared with the prior art, and the appearance of the microwave oven is improved as a result of the simplification of the switching arrangement.

## Claims

1. An operating switch for an oven, comprising:
a first rotary switching means (66), including a rotatable shaft (36, 38), a fixed support member (16), a first knob (67) at one end of the shaft (36, 38) to permit user rotation and reciprocation thereof, spring means (32, 42) for resiliently holding the shaft in a given axial position and a first switching disc (30) extending radially outwardly from the shaft (36, 38) so as to be rotated thereby, for selecting a first cooking parameter;
a second rotary switching means (62), having a rotatable member (40, 44) disposed coaxially about the shaft (36, 38), for selecting a second cooking parameter; and
a push switch (14) for activating a selected cooking process,
wherein the shaft (36, 38) and the rotatable member (40, 44) are individually rotatable about a common axis (X-X') and the shaft (36, 38) is movable against the spring means (32, 42), together with said switching disc, longitudinally of said axis for closing the push switch (14).

2. An operating switch according to claim 1, wherein the first (66) or the second (62) switching means includes means (16, 18, 34; 40, 50, 54) for producing a digital signal according to the angular position of rotation thereof.

3. An operating switch according to claim 2, wherein the first switching means (66) includes a plurality of concentric electrically conductive tracks (18b-c) formed with radially extending lands (18'b-c) at predetermined angular positions, and a plurality of resiliently deformable wiper contacts (34a,b) to be rotated with the shaft (36, 38) to make selective connection to said lands to define said digital signal.

4. An operating switch according to claim 2, wherein the the second switching means (62) includes a plurality of concentric electrically conductive tracks (54b-e) formed with radially extending lands (54'b-e) at predetermined angular positions, and a plurality of resiliently deformable wiper contacts (50b-e) to be rotated with the rotatable member (40, 44) to make selective connection to said lands to define said digital signal.

5. An operating switch according to any preceding claim, wherein the second switching means (62) includes a second knob (64) coaxial with and surrounding the first knob (67), and a fixed member (52), and the rotatable member (40, 44) includes a second switching disc (40) and is drivingly coupled to the second knob (64).

6. An operating switch according to claim 5, wherein the shaft (36, 38) extends through holes (24, 46, 60) in the fixed member (52), the second switching disc (40) and the first switching disc (30) to said push switch (14).

7. An oven provided with an operating switch (10) according to any preceding claim.

8. A microwave oven according to claim 7.

9. A microwave oven according to claim 8, including control means (120) responsive to said longitudinal movement of the shaft (36, 38) for starting a cooking process.

10. A microwave oven according to claim 9, wherein the control means (120) is responsive to rotation of the shaft (36, 38) and the rotatable member (40, 44) for respectively selecting a cooking time and a menu option.

11. A microwave oven according to claim 10, including display means (140) responsive to the control means for displaying the set cooking time and menu option.

12. A microwave oven according to any one of claims 8 to 11, including driving means (130) for generating microwave radiation under the control of the control means (120).

## Patentansprüche

1. Betriebsschalter für einen Ofen mit:
einer ersten drehbaren Schalteinrichtung (66) zum Auswählen eines ersten Zubereitungsparameters, die eine drehbare Welle (36, 38), ein feststehendes Trageglied (16), einen ersten Knopf (67) an einem Ende der Welle (36, 38), um dem Benutzer dessen Drehung sowie dessen Hin- und Herbewegung zu ermöglichen, eine Federeinrichtung (32, 42) zum elastischen Halten der Welle in einer vorgegebenen axialen Position sowie eine erste Schaltscheibe (30) aufweist, die sich von der Welle (36, 38) aus radial nach außen hin erstreckt, um durch diese gedreht zu werden;
einer zweiten Dreh-Schalteinrichtung (62), die ein drehbares Glied (40, 44) aufweist, das koaxial um die Welle (36, 38) angeordnet ist, zum Auswählen eines zweiten Zubereitungsparameters; und
einem Druckschalter (14) zum Aktivieren eines ausgewählten Zubereitungsvorgangs,
wobei die Welle (36, 38) und das drehbare Glied (40, 44) um eine gemeinsame Achse (X-X') individuell drehbar sind und die Welle (36, 38) zusammen mit der Schaltscheibe in Längsrichtung der Achse gegen die Federeinrichtung (32, 42) bewegbar ist, um den Druckschalter (14) zu schließen.

2. Betriebsschalter nach Anspruch 1, bei dem die erste (66) oder die zweite (62) Schalteinrichtung eine Einrichtung (16, 18, 34; 40, 50, 54) zum Erzeugen eines digitalen Signals gemäß ihrer Dreh-Winkelposition umfaßt.

3. Betriebsschalter nach Anspruch 2, bei dem die erste Schalteinrichtung (66) eine Mehrzahl von konzentrischen, elektrisch leitenden Bahnen (18b-c), die an vorgegebenen Winkelpositionen mit sich radial erstreckenden Stegen (18'b-c) ausgebildet sind, sowie eine Mehrzahl elastisch deformierbarer Schleifkontakte (34a, b) aufweist, die mit der Welle (36, 38) rotiert werden, um eine selektive Verbindung mit diesen Stegen herzustellen, um das digitale Signal zu definieren.

4. Betriebsschalter nach Anspruch 2, bei dem die zweite Schalteinrichtung (62) eine Mehrzahl von konzentrischen, elektrisch leitenden Bahnen (54b-e), die an vorgegebenen Winkelpositionen mit sich radial erstreckenden Stegen (54'b-e) ausgebildet sind, sowie eine Mehrzahl elastisch deformierbarer Schleifkontakte (54b-e) aufweist, die mit dem drehbaren Glied (40, 44) rotiert werden, um eine selektive Verbindung mit diesen Stegen herzustellen, um das digitale Signal zu definieren.

5. Betriebsschalter nach einem der vorhergehenden Ansprüche, bei dem die zweite Schalteinrichtung (62) einen zweiten Knopf (64), der zum ersten Knopf (67) koaxial ist und diesen umgibt, sowie ein feststehendes Glied (52) aufweist, und bei dem das drehbare Glied (40, 44) eine zweite Schaltscheibe (40) aufweist und mit dem zweiten Knopf (64) antriebsmäßig gekoppelt ist.

6. Betriebsschalter nach Anspruch 5, bei dem sich die Welle (36, 38) durch Löcher (24, 46, 60) hindurch in das feststehende Glied (52), die zweite Schaltscheibe (40) und die erste Schaltscheibe (30) hinein zum Druckschalter (14) hin erstreckt.

7. Ofen, der mit einem Betriebsschalter (10) nach einem der vorhergehenden Ansprüche versehen ist.

8. Mikrowellenofen nach Anspruch 7.

9. Mikrowellenofen nach Anspruch 8, der eine Steuereinrichtung (120) aufweist, die auf die Längsbewegung der Welle (36, 38) anspricht, um mit dem Zubereitungsvorgang zu beginnen.

10. Mikrowellenofen nach Anspruch 9, bei dem die Steuereinrichtung (120) auf eine Drehung der Welle (36, 38) und des drehbaren Gliedes (40, 44) anspricht, um eine Zubereitungszeit bzw. eine Menüoption auszuwählen.

11. Mikrowellenofen nach Anspruch 10, der eine Anzeigeeinrichtung (140) aufweist, die auf die Steuereinrichtung anspricht, um die eingestellte Zubereitungszeit und die Menüoption anzuzeigen.

12. Mikrowellenofen nach einem der Ansprüche 8 bis 11, der eine Antriebseinrichtung (130) zum Erzeugen von Mikrowellenstrahlung unter der Steuerung der Steuereinrichtung (120) aufweist.

## Revendications

1. Commutateur d'actionnement pour un four, comprenant :
des premiers moyens de commutation rotatifs (66) comprenant un arbre rotatif (36, 38), un élément de support fixe (16), une première molette (67) à une extrémité de l'arbre (36, 38) de façon à permettre à l'utilisateur de produire une rotation et un va-et-vient de celui-ci, des moyens formant ressort (32, 42) pour maintenir élastiquement l'arbre dans une position axiale donnée et un premier disque de commutation (30) s'étendant radialement vers l'extérieur à partir de l'arbre (36, 38) de façon à être tourné avec celui-ci, pour sélectionner un premier paramètre de cuisson ;
des deuxièmes moyens de commutation rotatifs (62) comprenant un élément rotatif (40, 44) disposé coaxialement autour de l'arbre (36, 38) pour sélectionner un deuxième paramètre de cuisson ; et
un commutateur à poussoir (14) pour actionner un processus de cuisson sélectionné,
dans lequel l'arbre (36, 38) et l'élément rotatif (40, 44) peuvent tourner individuellement autour d'un axe commun (X-X'), et l'arbre (36, 38) peut se déplacer à l'encontre des moyens formant ressort (32, 42) avec ledit disque de commutation, longitudinalement par rapport audit axe pour fermer le commutateur à poussoir (14).

2. Commutateur d'actionnement selon la revendication 1, dans lequel les premiers (66) ou les deuxièmes (62) moyens de commutation comprennent des moyens (16, 18, 34 ; 40, 50, 54) pour produire un signal numérique en fonction de la position angulaire de rotation de ceux-ci.

3. Commutateur d'actionnement selon la revendication 2, dans lequel les premiers moyens de commutation (66) comprennent une pluralité de pistes électriquement conductrices concentriques (18b à c) formées avec des zones s'étendant radialement (18'b à c) en des positions angulaires prédéterminées, et une pluralité de contacts à frotteurs déformables élastiquement (34a, b) destinés à tourner avec l'arbre (36, 38) de façon à établir une connexion sélective avec lesdites zones afin de définir ledit signal numérique.

4. Commutateur d'actionnement selon la revendication 2, dans lequel les deuxièmes moyens de commutation (62) comprennent une pluralité de pistes électriquement conductrices concentriques (54b à e) formées avec des zones s'étendant radialement (54'b à e) en des positions angulaires prédéterminées, et une pluralité de contacts à frotteurs déformables élastiquement (50b à e) destinés à tourner avec l'élément rotatif (40, 44) de façon à établir une connexion sélective avec lesdites zones afin de définir ledit signal numérique.

5. Commutateur d'actionnement selon l'une quelconque des revendications précédentes, dans lequel les deuxièmes moyens de commutation (62) comprennent une deuxième molette (64) coaxiale à la première molette (67) et entourant celle-ci, et un élément fixe (52), et l'élément rotatif (40, 44) comprend un deuxième disque de commutation (40) et est couplé en entraînement à la deuxième molette (64).

6. Commutateur d'actionnement selon la revendication 5, dans lequel l'arbre (36, 38) s'étend à travers des trous (24, 46, 60) dans l'élément fixe (52), le deuxième disque de commutation (40) et le premier disque de commutation (30) jusqu'audit commutateur à poussoir (14).

7. Four comportant un commutateur d'actionnement (10) selon l'une quelconque des revendications précédentes.

8. Four à micro-ondes selon la revendication 7.

9. Four à micro-ondes selon la revendication 8, comprenant des moyens de commande (120) réagissant audit déplacement longitudinal de l'arbre (36, 38) de façon à démarrer un processus de cuisson.

10. Four à micro-ondes selon la revendication 9, dans lequel les moyens de commande (120) réagissent à la rotation de l'arbre (36, 38) et de l'élément rotatif (40, 44) de façon à sélectionner respectivement un temps de cuisson et une option de menu.

11. Four à micro-ondes selon la revendication 10, comprenant des moyens d'affichage (140) réagissant aux moyens de commande de façon à afficher le temps de cuisson et l'option de menu établis.

12. Four à micro-ondes selon l'une quelconque des revendications 8 à 11, comprenant des moyens d'entraînement (130) pour générer un rayonnement de micro-ondes sous la commande des moyens de commande (120).
